# EUROPEAN PATENT APPLICATION

(11) **EP 4 521 610 A1**
(43) Date of publication of application: **12.03.2025**
(21) Application number: 23196570.8
(22) Date of filing: 11.09.2023
(51) Int. Cl.: H02K 5/18, F03D 80/60, H02K 7/18, H02K 9/22

(54) **WIND TURBINE GENERATOR AND WIND TURBINE COMPRISING SUCH A GENERATOR**

(71) Applicant: Siemens Gamesa Renewable Energy A/S, 7330 Brande (DK)
(72) Inventor: Azar, Ziad, Sheffield S10 4ED (GB); Groendahl, Erik, 8653 Them (DK); Jacobsen, Bo Nedergaard, 8300 Odder (DK); Nilifard, Reza, 7400 Herning (DK)
(74) Representative: SGRE-Association

(57) **Abstract**

Wind turbine generator, comprising an inner stator (3) and an outer rotor (1) comprising a cylindrical rotor yoke (4), wherein to an outside surface of the rotor yoke (4) several cooling elements (6) are attached, wherein the cooling elements (7) are cooling fins (7) comprising a plate-like attachment base (8) attached to the outside of the rotor yoke (4) and a fin part (9) extending in an angle from the attachment base (8).

## Description

The invention refers to a wind turbine generator, comprising an inner stator and an outer rotor comprising a cylindrical rotor yoke, wherein to an outside surface of the rotor yoke several cooling elements are attached.

A wind turbine usually comprises a wind turbine generator. The generator is driven by a rotor blade arrangement comprising a number of rotor blades attached to a hub, which hub is coupled to the rotor of the generator. A specific turbine type is a direct drive wind turbine, comprising at generator having an inner stator and an outer rotor, which is directly driven by the hub without an intermediate gear. The rotor comprises a number of magnet elements attached to the inner circumference of the cylindrical rotor yoke, which, in larger generators, may have a diameter of several meters, up to 10 m or more. Due to induced eddy currents in the permanent magnet elements and/or heat from the stator due to stator losses, the temperature of the magnet elements rises. This problem is observed especially in generators having a rotor with concentrated windings, but it may also be relevant in generators having a rotor with distributed windings. To avoid any irreversible demagnetization, as well as to enhance the generator performance the temperature of the magnet elements needs to be controlled. To address this problem, it is known to attach cooling elements at the outer surface of the rotor yoke, as for example disclosed in EP 2 445 087 B1, where cooling elements in the form of longitudinal bars having a rectangular cross-section are attached to the inner surface of the rotor yoke and are directly connected by a fastening means to the magnet element arranged at the inner surface, which direct connection allows for a heat transfer from the magnet elements to the cooling element. This arrangement is somehow complex, the cooling power is manageable.

It is an object of the invention to provide a wind turbine generator having an improved cooling arrangement for cooling the rotor respectively the rotor yoke.

Before addressing this object, a wind turbine generator as depicted above is characterized in that the cooling elements are cooling fins comprising a plate-like attachment base attached to the outside of the rotor yoke and a fin part extending in an angle from the attachment base.

The inventive generator, which is preferably a direct drive generator and which may comprise concentrated windings, comprises a rotor which is provided with a very simple, but very effective cooling arrangement. The rotor yoke is equipped with a number of cooling elements attached to its outside surface, which cooling elements are cooling fins. Each cooling fin, which is a metal item, comprises a plate-like attachment base and a fin part extending in an angle from that attachment base, so that it, in the mounting position, extends away from the outside surface of the rotor yoke. The cooling fin is attached to the rotor yoke by its attachment base, which provides a sufficiently large attachment surface. This allows for a sufficiently stable connection, which stands also higher loads arising from high rotation speed of the rotor. From this flat, plate-like attachment base the fin part extends in a direction away from the rotor yoke outside surface into the free space surrounding the rotor yoke. This fin provides a sufficiently large surface area, which allows for a high heat transfer rate from the cooling fin respectively the fin part to the surrounding area. The fin part may be plate-like having a longitudinal cross-section, but it may also be slightly curved. The length of the fin part is preferably larger than the length of the attachment base, seen in the circumferential direction of the yoke. There is nearly no limitation regarding the length of the fin part by which it extends into the surrounding space, which allows for increasing the heat transfer properties of the cooling fins by simply using longer fin parts and thereby increasing the heat transfer surface of the fin parts. In the operation of the generator, the magnet elements are heated due to their eddy currents and/or the stator heat. At least a part of this heat is transferred to the rotor yoke, which is made of metal like steel or cast metal, from where it is transferred to the attachment base, which gets heated. The heat is then transferred to the fin part extending in the open space surrounding the rotor yoke. Due to the large heat transfer area of the fin part, the heat can be perfectly transferred to the surrounding area, so that a highly improved heat transfer from the magnet elements to the fin part and from them to the surrounding is realized. This improved heat transfer allows for maintaining the temperature of the magnet elements in the operation of the process sufficiently low and far away from a critical temperature, where an irreversible demagnetization may occur. Further, the inventive cooling arrangement comprising the cooling fins is a simple arrangement, as the longitudinal cooling fins are simply attached to the outside surface. No connection to the inner side of the rotor yoke is necessary, further no connection to an underlying magnet element for the heat transfer is necessary, like in the above discussed prior art. Therefore, the rotor yoke respectively rotor of the inventive generator is simplified and cheaper.

Preferably the plate-like fin part extends in any angle which is appropriate to maximize the heat dissipation, for example an angle of 45-135°, more specifically of 60-120° ans especially in an angle of 90° from the attachment base. The fin parts are therefore radially arranged and extend radially from the rotor yoke outside surface.

As mentioned, a cooling fin is a simple metal item, which only comprises the attachment base and the fin part. Such a cooling fin may have therefore a simple T- or L-shaped cross-section. Such metal items are available in form of standard profiles, also having the requested mechanical properties regarding stiffness, dimensions, heat transfer coefficient etc.

This further contributes to the simplification of the inventive design and the reduction of manufacturing costs.

As mentioned, the length of a fin part, seen in the radial direction, is preferably greater than the width of the attachment base, seen in the circumferential direction. The width of the attachment base is chosen to ensure a sufficiently stable fixation of the cooling fin to the rotor yoke.

According to a preferred embodiment, the fin part is provided with a surface enlarging profile. As mentioned, the central purpose of the fin part is to provide a large heat transfer surface. The surface can be enlarged, when the fin part does not have a flat surface, but a profiled surface, which may show a wavy profile on one or both sides of the fin part or a recessed profile having a number of recesses provided on one or both sides. Such a profiling of the surface may significantly enlarge the total surface, which enlarged surface significantly increases the heat transfer power.

Preferably the cooling elements may extend parallel or in an angle of some degrees, for example up to +/- 30°, to the rotational axes of the rotor and over any length of the rotor yoke, for example over at least half of the length of the rotor yoke or the full length. As mentioned, the rotor yoke is a cylindrical metal item having a certain length of for example one or more meters, with a diameter of one or more meters. The magnet elements, usually permanent magnets, preferably extend over almost the whole length of the rotor yoke.

In a preferred embodiment, the outside surface of the rotor yoke is provided with recesses having a flat and plain bottom, in which recesses the attachment bases are accommodated. As mentioned, the rotor yoke is cylindrical and therefore has a cylindrical outside surface. Depending on the diameter, the outside surface is more or less curved. In order to allow for a perfect attachment and heat transfer contact of the cooling elements to the rotor yoke, the rotor yoke outside surface is provided with low recesses which are machined in the outside surface, which recesses have a flat, plain bottom. As also the attachment base is plate-like and has a flat attachment surface, corresponding surface geometries are provided, so that the attachment of the cooling elements is simplified, as no radius of any of the surfaces affects the connection and the heat transfer.

According to a preferred embodiment, an intermediate heat transfer layer is provided between the outside surface and the attachment base. This heat transfer layer provides an improved heat transfer from the rotor yoke to the attachment base. This layer also acts as a separation layer in case the rotor yoke and the cooling elements are made of different metal, like the rotor yoke being made of steel and the cooling elements being made of aluminum. Using two different metals and getting them in direct contact may provide a local element which may tend to local corrosion when humidity is present. This can advantageously be avoided, when the intermediate heat transfer their layer is provided, which completely separates the rotor yoke from the cooling elements, so that no direct contact is given.

The heat transfer layer may be a thermal paste, which may be painted over the whole contract area, like the whole recess area and/or the attachment surface of the attachment base. This paste may further remove any air pockets in the area between the connection surfaces. In an alternative, the heat transfer layer may also be a polymeric-based foil or plate like a pad, which is sandwiched between the rotor yoke and the attachment base, may be by means of a glue if necessary. The heat transfer layer shows perfect heat transfer properties and has a high heat transfer coefficient.

Preferably the attachment bases are fixated to the rotor yoke by means of screws which are screwed in threaded blind holes provided in the rotor yoke. In an alternative, the attachment bases are fixated to the rotor yoke by welding or gluing. According to the first alternative, the rotor yoke is provided with a number of threaded blind holes or blind bores provided at the outside surface. The attachment base is provided with the respective number of through holes. For fixating the cooling element, screws extending through the through holes are screwed into the threaded blind holes, which allows for a perfect fixation. Certainly, the screws may additionally be secured, for example by gluing them additionally into the respective through bores and/or the threaded blind holes or by using other securing means. The screws are arranged at least along the longitudinal sides of the attachment base, their number is chosen according to the mechanical requests regarding the mechanical fixation. According to a second alternative, the cooling elements respectively attachment bases may also be welded to the rotor yoke outside surface. The welding process and the welding material is chosen depending on the materials of the rotor yoke and the cooling elements. Finally, according to a third alternative the cooling elements respectively the attachment bases may be glued to the rotor yoke outside surface by means of a appropriate glue having a good thermal conductivity.

The wind turbine generator may further be characterized in that a sealing means is provided in the transition zone from the attachment base to the outside surface and/or transition zone from the screws to the attachment base. This sealing means provides for a waterproof sealing, so that no humidity or dust may enter the sealed areas. The sealing means, which may for example would be a polymer- or silicone-based paste or any other suitable sealing means, is simply attached to the transition zones contacting both the rotor yoke and the attachment base respectively the attachment base and the screw, wherever it is applied. By using this sealing means, any small gaps or the like, which may be given between any of the contact partners, can be sealed. When the attachment bases are welded to the rotor yoke, no sealing means may be necessary in the welding zone, as the welding seam is tight over its length.

As already mentioned, the rotor yoke is provided at an inner side with a number of magnet elements, preferably permanent magnets. In general, the more cooling elements, the better is the cooling power, as the total heat transfer surface area provided by the fin parts is larger. The number of cooling elements may correspond to the number of magnets, so that for every magnet a cooling element is provided. Other arrangement orders are also feasible, like one cooling element for every second magnet element or for every third magnet element or for every fourth magnet element.

Preferably at least some of the cooling fins are arranged radially flush with a magnet element. For an excellent heat transfer and a short transfer length, cooling elements respectively cooling fins are arranged radially flush with an underlying magnet element, so that the heat needs to be transferred only over a very small length, seen in the radial direction. Preferably the number of cooling elements corresponds to the number of magnet elements, so that for each magnet element a radially flush cooling element is provided. Certainly, only some of the cooling elements are arranged flush with respective magnet elements, wherein the other cooling elements are randomly distributed around the circumference in relation to the magnet elements arranged at the inner circumference. Nevertheless, all cooling elements are preferably equally distributed around the outer circumference, so that the distance between two cooling elements, seen in the circumferential direction, is always the same.

The cooling elements are for example made of aluminum, preferably a corrosion resistant aluminum. Aluminum has very good heat transfer properties, it has a sufficiently high heat transfer coefficient respectively heat conductivity. These properties go along with a lower weight, compared to cooling elements made of steel. So, the cooling elements do not remarkably contribute to the total weight of the rotor, which therefore does not remarkably raise the force resting on the respective bearings and the shaft. Preferably a corrosion resistant aluminum is used. When the wind turbine is arranged offshore, the air respectively the humidity is salty, which may enhance corrosion. When a corrosion resistant aluminum is used, any corrosion can be avoided. Certainly, also other materials, preferably corrosion resistant materials, may be used, like appropriate metal alloys based on steel or aluminum.

In addition to the wind turbine generator, the invention also refers to a wind turbine, comprising a wind turbine generator as depicted above.

Other objects and features of the present invention will become apparent from the following detailed description considered in conjunction with the accompanying drawings. The drawings, however, are only principle sketches designed solely for the purpose of illustration and do not limit the invention. The drawings show:
- fig. 1: a principal illustration, and a partial prospective view, of a rotor of an inventive wind turbine generator,
- fig, 2: an enlarged view of the outside surface of the rotor yoke of the rotor of fig. 1,
- fig. 3: the principal illustration of a part of the rotor of the inventive generator in a cross-section,
- fig. 4: an example of a cross-section of a cooling element of a first embodiment,
- fig. 5: an example of a cross-section of a cooling element of a second embodiment,
- fig. 6: an example of a cross-section of a cooling element of a third embodiment, and
- fig. 7: a principal illustration of an inventive wind turbine comprising an inventive generator.

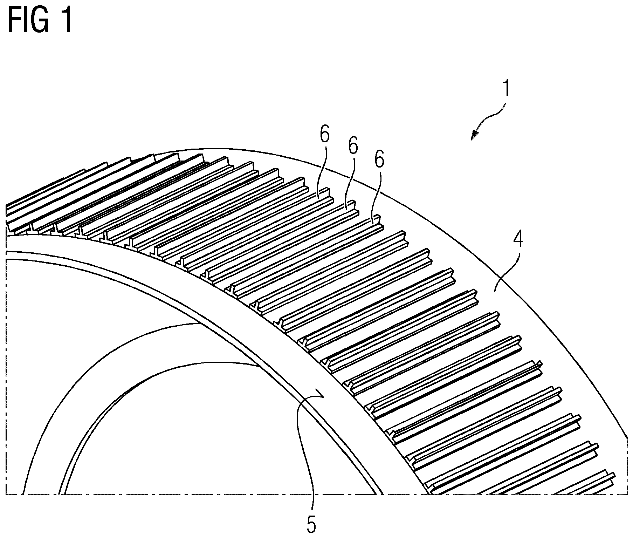

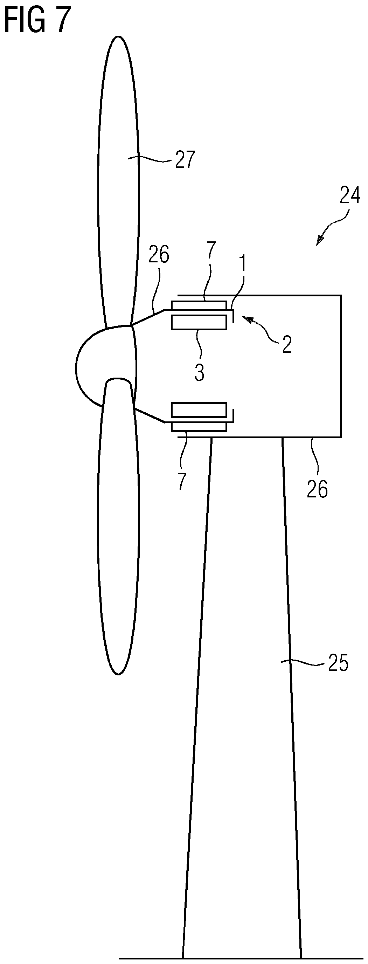

Fig. 1 shows a principal illustration of an inventive rotor 1 of an inventive wind turbine generator 2, which is shown in principal in fig. 7. Beside the rotor 1 the generator 2 comprises an inner stator 3, wherein the rotor 1 extends outside around the inner stator 3.

The rotor 1 comprises a rotor yoke 4 having a cylindrical geometry. At the outside surface 5 and number of longitudinal cooling elements 6 extending parallel to the axis of rotation of the rotor 1. The cooling elements 6 extend over at least half of the length of the rotor yoke 4, as shown in fig. 1.

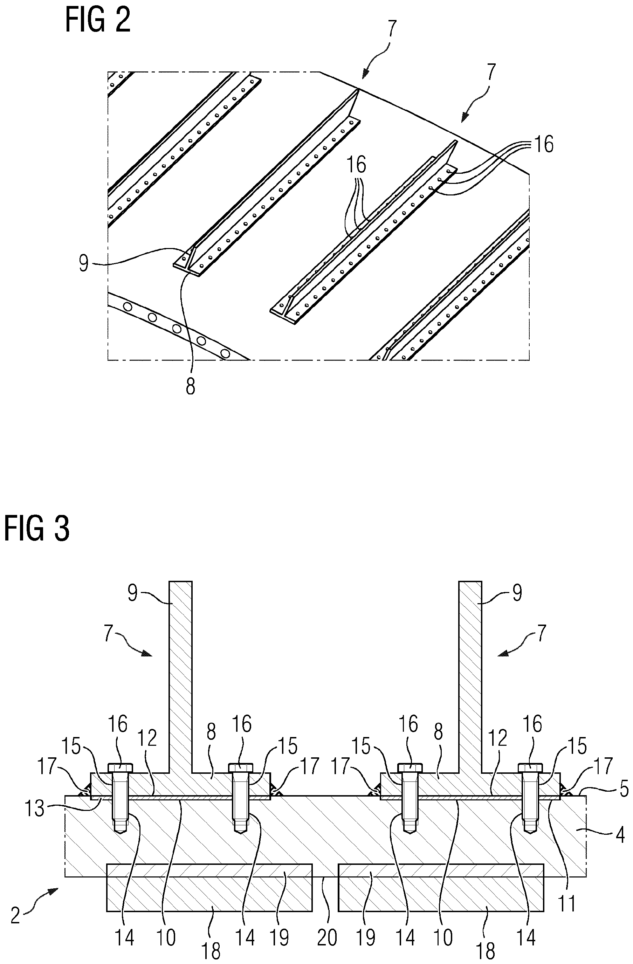

Each cooling element 6 is for example made of aluminum, preferably corrosion resistant aluminum, while also other good heat conducting materials, preferably corrosion resistant materials may be used. It is longitudinal item, and is realized as a cooling fin 7, details of which are shown in the figures 2 and 3. Each cooling fin 7 comprises an attachment base 8, which is plate-like. A fin part 9, which in the shown embodiments is also plate-like, extends under an angle, in the shown example under an angle of 90°, from the attachment base, so that, when mounted, the fin part 9 extends into the surrounding space. The cooling fins 7 therefore have a T-shaped profile, as shown especially in fig. 3.

The outer surface 5 of the rotor yoke 4 is provided with a number of recesses 10 corresponding to the number of cooling fins 7 to be attached to the rotor yoke 4. Each recess 10 comprises a flat, plain bottom 11. As also the attachment bases 8 have a flat, plain attachment surface 12, the corresponding neighboring surfaces have the same geometry. The recess 11 may have a depth of for example 1 - 10 mm, so that the thickness of the attachment base 8 is greater than the depth of the recess 11, as shown in fig. 3. To enhance the heat transfer from the metal rotor yoke 4, which is for example made of steel, to the cooling fin 7, an intermediate heat transfer layer 13 is arranged between the bottom 10 and the attachment surface 12. This heat transfer layer 13 is preferably a thermal paste or thermal gap filler or a thermal pad, which, in addition to the enhancement of the heat transfer, also removes any interface air pockets, so that a perfect heat transfer is possible.

For attaching the cooling fins 7 to the rotor yoke 10, the rotor yoke 10 is provided with threaded blind holes 14, and the attachment bases 8 are provided with respective through holes 15. Screws 16 are the fixation means for fixating the cooling fins 7. They extend through the through holes 15 and are screwed into the threaded blind holes 14, so that the attachment bases 8 are firmly fixated to the rotor yoke 4. The screw connections realized by the screws 16 may additionally be secured by respective securing means like a glue or little welding spots or the like, so that any unintended loosening of the screws 15 is avoided. As fig. 2 shows, a number of screws 16 are provided on both longitudinal sides of each attachment base 8, so that a perfect securing is given.

As fig. 3 further shows, as sealing means 17 is provided in the transition zone between the attachment base 8 and the outside surface 5 of the rotor yoke for. This sealing means is a waterproof seal and is applied around the whole circumference of the attachment base 8 to prevent any dust or water from entering the fixation area. Any such sealing means may also be provided in the respective screw connections, like a glue or a sealing paste or a sealing washer or the like.

Further, see fig. 3, the rotor 1 comprises a number of magnet elements 18, which are attached via respective base plates 19 to the inner surface 20 of the rotor yoke 4. The magnet elements 18 are preferably permanent magnets. As fig. 3 shows, the cooling fins 7, or at least a part of the cooling fins 7 distributed around the circumference, are radially flush with the magnet elements 18 arranged on the inner side of the rotor yoke 4. This enhances the heat transfer from the magnet elements 18, which get heated by eddy currents when the generator is in operation, as the heat, which is to be transferred to the cooling fins 7, needs to be transferred only over a small distance corresponding nearly to the thickness of the rotor yoke 4, due to the radial correlation of the cooling fins 7 to the magnet elements 18. Preferably all cooling fins 7 are readily flush with a magnet element 18, so that the number of cooling fins 7 corresponds to the number of magnet elements 18. Nevertheless, the numbers may also be different (like less cooling fins 7 than magnet elements 18), respectively the arrangement of all cooling fins 7, or at least a part of them, may not be in relation to the position of the magnet elements 18.

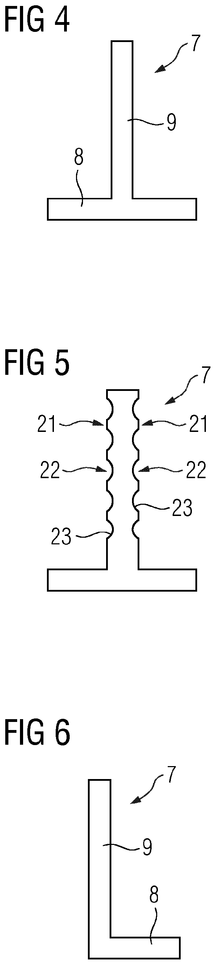

Fig. 4 shows a cooling fin 7 of the first embodiment, as already shown in fig. 3. It comprises an attachment base 8 and a fin part 9, which extends under an angle of 90° from the attachment base 8. The cross-section is T-shaped, the cooling fin 9 is arranged in the middle of the attachment base 8. The cooling fin 9 is longer than the attachment base 8 is wide. The cooling fin 9 may for example be longer, preferably by a factor of 1.1 - 1.5, or, if the surrounding geometry allows, even longer.

Fig. 5 shows and embodiment of a T-shaped cooling fin 7, where the surfaces 21 of the fin part 9 shows a profile 22 for enhancing the surface area and therefore the heat dissipation area. The profile 22 is wavy and comprises a number of recesses 23, which in this example are rounded. Certainly, also groove-like recesses may be used. By such a profiling the surface area of each surface side 21 may be enlarged remarkably.

Fig. 6 shows another embodiment of a cooling fin 7. This cooling fin 7 has and L-shaped cross-section, again comprising an attachment base 8 and a fin part 9 extending under an angle of 90°. Also such a cooling fin 7 may be used in the same way as described regarding fig. 3, wherein only on one row of fastening screws 16 is provided.

Finally, fig.7 shows an inventive wind turbine 24, comprising a tower 25 and a nacelle 26 attached to the tower 25. The rotor 1 of the generator 2 is connected to a hub 26, to which a number of rotor blades 27 is attached. When wind blows, the wind interacts with the rotor blades 27, thereby rotating the hub 26, which rotates the rotor 1, which rotates around the stationary stator 3, so that the generator 2 produce his electric power, as commonly known. As shown, the cooling fins 7 of the rotor 1 extent into the surrounding space, where air flows, to which the heat, transferred from the heated magnet elements 18, is transferred.

Although the present invention has been described in detail with reference to the preferred embodiment, the present invention is not limited by the disclosed examples from which the skilled person is able to derive other variations without departing from the scope of the invention.

Independent of the grammatical term usage, individuals with male, female or other gender identities are included within the term.

## Claims

1. Wind turbine generator, comprising an inner stator (3) and an outer rotor (1) comprising a cylindrical rotor yoke (4), wherein to an outside surface of the rotor yoke (4) several cooling elements (6) are attached, **characterized in that** the cooling elements (7) are cooling fins (7) comprising a plate-like attachment base (8) attached to the outside of the rotor yoke (4) and a fin part (9) extending in an angle from the attachment base (8).

2. Wind turbine generator according to claim 1, **characterized in that** the plate-like fin part (9) extends in an angle 45 - 135°, preferably of 60 - 120°, and especially of 90° from the attachment base (8).

3. Wind turbine generator according to claim 1 or 2, **characterized in that** the cooling fins (7) have a T- or L-shaped cross section.

4. Wind turbine generator according to one of the preceding claims, **characterized in that** the length of a fin part (9), seen in the radial direction, is greater that the width of the attachment base (8), seen in the circumferential direction.

5. Wind turbine generator according to one of the preceding claims, **characterized in that** the fin part (9) is provided with a surface enlarging profile (22).

6. Wind turbine generator according to one of the preceding claims, **characterized in that** the cooling fins (7) extend parallel or under an angle to a rotational axis of the rotor (1) and over at least half the length of the rotor yoke (4).

7. Wind turbine generator according to one of the preceding claims, **characterized in that** the outside surface (5) is provided with recesses (11) having a flat and plane bottom (13), in which recesses (11) the attachment bases (8) are accommodated.

8. Wind turbine generator according to one of the preceding claims, **characterized in that** an intermediate heat transfer layer (13) is provided between the outside surface (5) and the attachment base (8).

9. Wind turbine generator according to claim 8, **characterized in that** the heat transfer layer (13) is a thermal paste or a polymer-based foil or plate or a thermal pad.

10. Wind turbine generator according to one of the preceding claims, **characterized in that** the attachment bases (8) are fixated to the rotor yoke (4) by means of screws (16) which are screwed in threaded blind holes (14) provided in the rotor yoke (4), or **in that** the attachment bases (8) are fixated to the rotor yoke (4) by welding, or **in that** the attachment bases are fixated by gluing.

11. Wind turbine generator according to one of the preceding claims, **characterized in that** a sealing means (17) is provided in the transition zone from the attachment base (8) to the outside surface (5) and/or transition zone from the screws (16) to the attachment base (8).

12. Wind turbine generator according to one of the preceding claims, **characterized in that** the rotor yoke (4) is provided at an inner side (20) with a number of magnet elements (18), wherein the number of cooling fins (7) is at least half the number of magnet elements (18).

13. Wind turbine generator according to claim 12, **characterized in that** at least some of the cooling fins (7) are arranged radially flush with a magnet element (18).

14. Wind turbine generator according to one of the preceding claims, **characterized in that** the cooling fins (7) are made of aluminum, preferably a corrosion resistant aluminum.

15. Wind turbine, comprising a wind turbine generator (2) according to one of the preceding claims.
